# EUROPEAN PATENT APPLICATION

(11) **EP 3 812 707 A1**
(43) Date of publication of application: **28.04.2021**
(21) Application number: 20811502.2
(22) Date of filing: 25.02.2020
(51) Int. Cl.: G01C 21/28

(54) **POSITIONING METHOD AND POSITIONING DEVICE**

(30) Priority: 23.08.2019 CN 201910781545
(71) Applicant: Huawei Technologies Co., Ltd., Shenzhen, Guangdong 518129 (CN)
(72) Inventor: LIU, Hang, Shenzhen Guangdong 518129 (CN); SUI, Linlin, Shenzhen Guangdong 518129 (CN); LI, Mingchao, Shenzhen Guangdong 518129 (CN)
(74) Representative: Gill Jennings & Every LLP
(86) International application number: PCT/CN2020/076569
(87) International publication number: WO 2021/036210

(57) **Abstract**

This application provides a device positioning method, which is applied to a vehicle and includes: obtaining location information of at least one landmark and feature information of the at least one landmark, where the feature information includes pattern information and/or identification information; obtaining feature information of a first landmark, where the feature information of the first landmark includes pattern information and/or identification information of the first landmark, and the at least one landmark includes the first landmark; determining location information of the first landmark based on the feature information of the first landmark; and determining a location of a device based on the location information of the first landmark. According to the device positioning method provided in this application, a vehicle can be positioned without a need to equip the vehicle with a high-resolution sensing unit and excessively improve an area where the vehicle locates.

## Description

This application claims priority to Chinese Patent Application No. 201910781545.3, filed with the China National Intellectual Property Administration on August 23, 2019 and entitled "POSITIONING METHOD AND POSITIONING APPARATUS", which is incorporated herein by reference in its entirety.

### TECHNICAL FIELD

Embodiments of this application relate to the field of communications and positioning technologies, and in particular, to a positioning method and a positioning apparatus.

### BACKGROUND

With development of society, smart cars are gradually entering the daily life of people. In-vehicle communication plays a quite important role in assisted driving and automated driving of smart cars. Communication between vehicles, between a vehicle and a road, between a vehicle and a network, and between a vehicle and all facilities that can be connected and perceived may be implemented through low-latency wireless communication, to implement advanced intelligent assisted driving and self-driving. After the vehicle has a communication capability, the vehicle may transfer vehicle status information (for example, an acceleration, a velocity, and an orientation) of the vehicle or real-time traffic status information (which may be from a roadside infrastructure, or may be from a traffic participant such as a surrounding vehicle, pedestrian, or rider) in a driving area that is perceived or received by a vehicle sensor to a surrounding vehicle or a roadside facility, thereby ensuring safe and efficient running of an entire road.

An automated valet parking system (Automated Valet Parking System, AVPS) provides an automated valet parking service for a user. During parking, the AVPS supports online parking space reservation and automated parking. During retrieving, the AVPS supports one-click retrieving and automated driving to an automated pickup area. The AVPS may be used in public parking lots such as a shopping mall parking lot and an airport parking lot, to reduce a time of searching for a parking space by a user and greatly make parking and travel of people convenient.

However, in an underground parking lot or another indoor environment, because a satellite positioning signal is weak, how to accurately position a vehicle becomes an important problem that needs to be resolved by the AVPS.

To overcome the foregoing technical problem, the prior art provides two solutions.

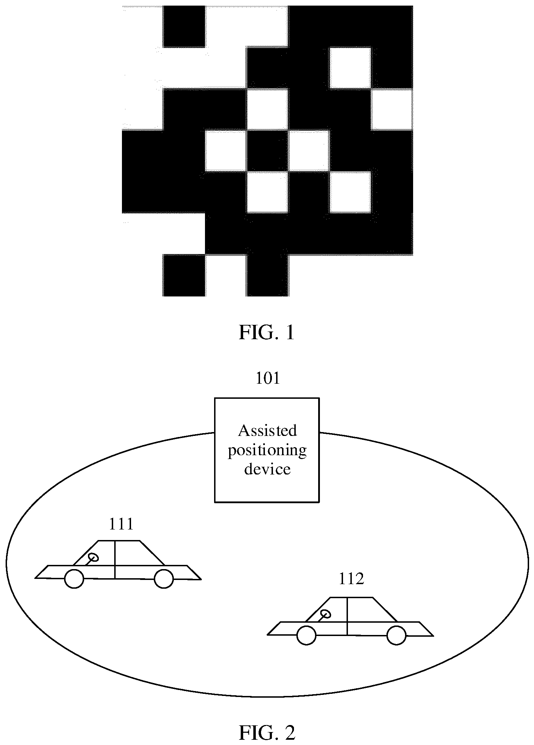

In a first solution, a vehicle may recognize, by using a sensor, a landmark (coded landmark) disposed in a parking lot. Absolute three-dimensional coordinates corresponding to the landmark are written into a code on the landmark according to a specific encoding rule. FIG. 1 shows a style of a landmark image. A binary encoding format is used, and three-dimensional coordinates may be encoded into patterns of black and white squares, where black represents 1 and white represents 0. The vehicle obtains the landmark image by using a camera, and then obtains, through decoding according to a preset decoding rule, the three-dimensional coordinates corresponding to the landmark image. Then the vehicle positions the vehicle based on the three-dimensional coordinates to determine a location of the vehicle. In this method, because the vehicle needs to recognize the landmark image and perform decoding to determine the three-dimensional coordinates for positioning, relatively high requirements are imposed on an image recognition capability and a decoding capability of the vehicle. For the image recognition capability, the vehicle not only needs to recognize a contour of a landmark, but also needs to accurately recognize a code on the landmark before decoding. In addition, based on an encoding algorithm, decoding also needs to consume a large quantity of computing resources of the vehicle. In addition, when resolution of an in-vehicle camera is not high enough or a lighting condition in a parking lot is relatively poor, it is difficult to perform positioning by using this method.

In a second solution, in an AVPS system, a large quantity of sensors such as a camera, a radar, and a geomagnetic sensor may be deployed in a parking lot. Based on vehicle information obtained by the large quantity of sensors in the parking lot, the parking lot may easily determine a location of a vehicle, and then send location information of the vehicle to the vehicle. In this method, a main operation of positioning is performed in the parking lot, and the vehicle only needs to receive real-time positioning coordinates transferred by the parking lot, without performing positioning. In this manner, a parking lot needs to be largely improved, for example, a large quantity of sensors need to be deployed, which requires relatively high improvement costs. Because most vehicles have a basic positioning capability, applying this method cannot fully use the positioning capability of the vehicles.

Therefore, in an environment in which a satellite positioning signal is weak, how to provide a positioning method that can implement vehicle positioning without equipping a vehicle with a high-resolution sensing unit and excessively improving an area environment outside the vehicle is a technical problem that research and development personnel need to resolve.

### SUMMARY

A positioning method and a positioning apparatus provided in embodiments of this application may be widely applied to areas in which a satellite positioning signal is weak, for example, a parking lot, a tunnel, a bridge, a remote mountain area, a mountain and a canyon, and a city block blocked by a tall building, a tree, or the like. A parking lot is used as an example when this application is described by using the following content.

An objective of this application is to provide a positioning method and a positioning apparatus, so that vehicle positioning can be implemented based on a conventional perception function and processing capability of an existing vehicle, without excessive improvement to a parking lot and with only a simple assisted positioning function of the parking lot.

The foregoing objective and other objectives are achieved by using features in the independent claims. Further implementations are reflected in the dependent claims, the specification, and the accompanying drawings.

According to a first aspect, a device positioning method is provided, including: obtaining location information of at least one landmark and feature information of the at least one landmark, where the feature information includes pattern information and/or identification information; obtaining feature information of a first landmark, where the at least one landmark includes the first landmark; determining location information of the first landmark based on the feature information of the first landmark; and then determining a location of a device based on the location information of the first landmark.

The to-be-positioned device obtains the location information and the feature information of the at least one landmark, to obtain a mapping relationship between the feature information and the location information of the at least one landmark; and obtains the feature information of the first landmark, so that the location information of the first landmark can be determined based on the mapping relationship between feature information and location information. The first landmark is a nearby landmark recognized by the to-be-positioned device.

According to the method, the to-be-positioned device only needs to recognize feature information of a nearby landmark, for example, a number on the landmark, to obtain location information of the landmark based on the obtained mapping relationship, so that the location of the to-be-positioned device can be determined. According to the positioning method, the to-be-positioned device does not need to have a high-resolution sensing unit, but only needs to recognize a landmark, and obtain the location of the to-be-positioned device by using location information of the landmark, so that an implementation process is simple.

With reference to the first aspect, in a first possible implementation, the device positioning method further includes: obtaining first relative location information of the device, where the first relative location includes relative location information between the device and the first landmark; and the determining a location of a device includes: determining the location of the device based on the location information of the first landmark and the obtained first relative location information.

According to this implementation, the to-be-positioned device determines the location based on the location information of the first landmark and the relative location information between the to-be-positioned device and the first landmark, so that the to-be-positioned device can be more accurately positioned.

With reference to the first possible implementation of the first aspect, in a second possible implementation of the method, the device positioning method further includes: obtaining feature information of at least one second landmark; obtaining at least one piece of second relative location information, where the at least one piece of second relative location information includes relative location information between the device and the at least one second landmark; and determining location information of the at least one second landmark based on the feature information of the at least one second landmark; and the determining a location of a device includes: determining the location of the device based on the location information of the first landmark, the location information of the at least one second landmark, the first relative location information, and the at least one piece of second relative location information.

According to this implementation, the to-be-positioned device performs positioning by using a plurality of landmarks, so that a recognition error occurring during positioning by using a single landmark is reduced, thereby improving vehicle positioning accuracy.

With reference to any one of the first aspect and the foregoing implementations of the first aspect, in a third possible implementation of the method, the obtaining location information of at least one landmark and feature information of the at least one landmark includes: receiving information, where the information includes the location information of the at least one landmark and the feature information of the at least one landmark; or reading prestored information, where the prestored information includes the location information of the at least one landmark and the feature information of the at least one landmark.

In this implementation, the to-be-positioned device may obtain the location information and the feature information of the landmark by receiving the information or reading the prestored information. Optionally, this implementation is applicable to a case in which landmark information sent by a parking lot is received when a vehicle enters the parking lot for the first time, and is applicable to a case in which the to-be-positioned device prestores map information of a parking lot, the map information includes location information and feature information of a landmark, and the to-be-positioned device directly reads the map information during positioning.

With reference to any one of the first aspect and the foregoing implementations of the first aspect, in a fourth possible implementation of the method, the device positioning method further includes: sending first information, where the first information includes the feature information of the first landmark; and the determining location information of the first landmark based on the feature information of the first landmark specifically includes: receiving second information, where the second information includes the location information of the first landmark.

In this implementation, when the to-be-positioned device cannot obtain an identity of the first landmark through parsing based on the feature information of the first landmark that is obtained by the to-be-positioned device, and therefore cannot obtain the location information of the first landmark, the to-be-positioned device sends the feature information of the first landmark, a parking lot end performs parsing based on the feature information of the first landmark, determines identity information of the first landmark, and determines the location information of the first landmark, and the to-be-positioned device receives the location information of the first landmark that is sent by a parking lot. According to the positioning method, optionally, when resolution of an in-vehicle camera of the to-be-positioned device is insufficient or ambient light of the parking lot is relatively dark, landmark location parsing is performed by using the external parking lot end, so that the to-be-positioned device can also be positioned.

According to a second aspect, a device positioning apparatus is provided, including: an information obtaining module, configured to obtain location information of at least one landmark and feature information of the at least one landmark, where the feature information includes pattern information and/or identification information; a perception module, configured to obtain feature information of a first landmark, where the at least one landmark includes the first landmark; and a processing module, configured to: determine location information of the first landmark based on the feature information of the first landmark, and determine a location of the device based on the location information of the first landmark.

The to-be-positioned device obtains the location information and the feature information of the at least one landmark by using the information obtaining module, to obtain a mapping relationship between the feature information and the location information of the at least one landmark. The perception module can obtain the feature information of the first landmark. The processing module can determine the location information of the first landmark based on the feature information of the first landmark that is obtained by the perception module and the mapping relationship, which is obtained by the information obtaining module, between a landmark location and feature information. The first landmark is a nearby landmark of the to-be-positioned device that is recognized by the to-be-positioned device, and a location of the first landmark is a location near the vehicle.

According to the positioning apparatus, the vehicle only needs to recognize feature information of a nearby landmark, for example, a number on the landmark, to obtain location information of the landmark based on the obtained mapping relationship, so that the location of the vehicle can be determined. The positioning apparatus does not need to have a high-resolution perception module, but only needs to recognize a landmark by using the perception module, and find the location of the to-be-positioned device by using location information of the landmark, so that an implementation process is simple.

With reference to the second aspect, in a first possible implementation of the device positioning apparatus, the perception module is further configured to obtain first relative location information, where the first relative location includes relative location information between the device and the first landmark; and the processing module is further configured to determine the location of the device based on the location information of the first landmark and the relative location information between the device and the first landmark.

According to this implementation, the positioning apparatus determines the location based on the location information of the first landmark and the relative location information between the to-be-positioned device and the first landmark, so that the to-be-positioned device can be more accurately positioned.

With reference to the first possible implementation of the second aspect, in a second possible implementation of the device positioning apparatus, the perception module is further configured to obtain feature information of at least one second landmark and at least one piece of second relative location information, where the at least one piece of second relative location information includes relative location information between the device and the at least one second landmark; and the processing module is further configured to determine the location of the device based on the location information of the first landmark, the location information of the at least one second landmark, the relative location information between the device and the first landmark, and the relative location information between the device and the at least one second landmark.

According to this implementation, the positioning apparatus performs positioning by using a plurality of landmarks, so that a recognition error occurring during positioning by using a single landmark is reduced, thereby improving accuracy of positioning the to-be-positioned device.

With reference to any one of the second aspect and the foregoing implementations of the second aspect, in a third possible implementation of the device positioning apparatus, the information obtaining module is configured to receive information, where the information includes the location information of the at least one landmark and the feature information of the at least one landmark; or the information obtaining module is configured to read prestored information, where the prestored information includes the location information of the at least one landmark and the feature information of the at least one landmark.

In this implementation, the positioning apparatus may obtain the location information and the feature information of the landmark by receiving the information or reading the prestored information. Optionally, this implementation is applicable to a case in which landmark information sent by a parking lot is received when the to-be-positioned device enters the parking lot for the first time, and is applicable to a case in which the to-be-positioned device prestores map information of a parking lot, the map information includes location information and feature information of a landmark, and the positioning apparatus directly reads the map information during positioning.

With reference to any one of the second aspect and the foregoing implementations of the second aspect, in a fourth possible implementation of the device positioning apparatus, the apparatus further includes a sending module, configured to send first information, where the first information includes the feature information of the first landmark; and the information obtaining module is further configured to receive second information, where the second information includes the location information of the first landmark.

In this implementation, when the positioning apparatus cannot obtain an identity of the first landmark through parsing based on the feature information of the first landmark that is obtained by the positioning apparatus, and therefore cannot obtain the location information of the first landmark, the positioning apparatus sends the feature information of the first landmark by using the sending module, a parking lot end performs parsing based on the feature information of the first landmark, determines identity information of the first landmark, and determines the location information of the first landmark, and the information obtaining module of the positioning apparatus receives the location information of the first landmark that is sent by a parking lot. According to the positioning apparatus, optionally, when resolution of the perception module is insufficient or ambient light of the parking lot is relatively dark, landmark location parsing is performed by using the external parking lot end, so that the to-be-positioned device can also be positioned.

According to a third aspect, an assisted positioning method is provided, including: sending location information of at least one landmark and feature information of the at least one landmark to a to-be-positioned device, where the feature information includes pattern information and/or identification information.

The assisted positioning method is applied to a parking lot end, and is used to provide assisted positioning for the to-be-positioned device in a parking lot. According to the assisted positioning method, the parking lot end may actively send landmark information to the to-be-positioned device, where the sending is performed in a unicast manner, a multicast manner, a broadcast manner, or the like. Based on the received landmark information, the to-be-positioned device can determine location information of a first landmark after obtaining feature information of the first landmark, to determine a location of the vehicle. The assisted positioning method requires a simple parking lot function, and can effectively help the to-be-positioned device in the parking lot complete positioning.

With reference to the third aspect, in a first possible implementation of the method, the method further includes: receiving first information from the to-be-positioned device, where the first information includes feature information of a first landmark; and sending second information to the to-be-positioned device, where the second information includes location information of the first landmark, so that the to-be-positioned device determines a location of the to-be-positioned device based on the location information of the first landmark.

According to the assisted positioning method, after receiving the feature information of the first landmark that is sent by the to-be-positioned device, the parking lot end parses the feature information of the first landmark, and determines the location information of the first landmark based on identity information of the first landmark that is obtained through parsing, to send the location information of the first landmark to the to-be-positioned device. According to the assisted positioning method, the parking lot end only needs to receive information, obtain an identity of the first landmark through parsing, and send the location information of the first landmark to the to-be-positioned device. According to the assisted positioning method, optionally, when resolution of a perception module of the to-be-positioned device is insufficient or ambient light of the parking lot is relatively dark, the to-be-positioned device can also be assisted in completing positioning.

According to a fourth aspect, an assisted positioning apparatus is provided, including an information sending module, where the information sending module is configured to send location information of at least one landmark and feature information of the at least one landmark to a to-be-positioned device, where the feature information includes pattern information and/or identification information.

The assisted positioning apparatus is installed in a parking lot, and is used to provide assisted positioning for the to-be-positioned device in the parking lot. According to this solution, the assisted positioning apparatus may actively send landmark information to the to-be-positioned device, where the sending is performed in a unicast manner, a multicast manner, a broadcast manner, or the like. Based on the received landmark information, the to-be-positioned device can determine location information of a first landmark after obtaining feature information of the first landmark, to determine a location of the vehicle. The assisted positioning apparatus has a simple function, and can effectively help the to-be-positioned device in the parking lot complete positioning.

With reference to the fourth aspect, in a first possible implementation of the assisted positioning apparatus, the assisted positioning apparatus further includes: an information receiving module, configured to receive first information from the to-be-positioned device, where the first information includes feature information of a first landmark; a processing module, configured to determine location information of the first landmark based on the received feature information of the first landmark; and an information sending module, configured to send second information to the to-be-positioned device, where the second information includes the location information of the first landmark, so that the to-be-positioned device determines a location of the to-be-positioned device based on the location information of the first landmark.

According to this implementation, the assisted positioning apparatus receives, by using the information receiving module, the feature information of the first landmark that is sent by the to-be-positioned device, the processing module parses the feature information of the first landmark, and determines the location information of the first landmark based on identity information of the first landmark that is obtained through parsing, and then the information sending module sends the location information of the first landmark to the to-be-positioned device. In this technical solution, the assisted positioning apparatus only needs to receive information, obtain an identity of the first landmark through parsing, and send the location information of the first landmark to the to-be-positioned device. According to the assisted positioning apparatus, optionally, when resolution of a perception module of the to-be-positioned device is insufficient or ambient light of the parking lot is relatively dark, the to-be-positioned device can also be assisted in completing positioning.

According to a fifth aspect, this application provides a communications apparatus. The communications apparatus may be a terminal device, or may be a chip used for a terminal device. The communications apparatus has a function of implementing each embodiment of the first aspect. The function may be implemented by hardware, or may be implemented by hardware by executing corresponding software. The hardware or the software includes one or more modules corresponding to the function.

According to a sixth aspect, this application provides a communications apparatus. The apparatus may be a network device, or may be a chip used for a network device. The apparatus has a function of implementing each embodiment of the second aspect. The function may be implemented by hardware, or may be implemented by hardware by executing corresponding software. The hardware or the software includes one or more modules corresponding to the function.

According to a seventh aspect, this application provides a communications apparatus, including a processor and a memory. The memory is configured to store a computer executable instruction, and when the apparatus runs, the processor executes the computer executable instruction stored in the memory, so that the apparatus performs the methods in the foregoing aspects.

According to an eighth aspect, this application provides a communications apparatus, including a unit or a means (means) configured to perform the steps in the foregoing aspects.

According to a ninth aspect, this application provides a communications apparatus, including a processor and an interface circuit. The processor is configured to: communicate with another apparatus through the interface circuit, and perform the methods in the foregoing aspects. There are one or more such processors.

According to a tenth aspect, this application provides a communications apparatus, including a processor, configured to: connect to a memory, and invoke a program stored in the memory, to perform the methods in the foregoing aspects. The memory may be located in the apparatus, or may be located outside the apparatus. In addition, there are one or more such processors.

According to an eleventh aspect, this application further provides a computer readable storage medium. The computer readable storage medium stores an instruction, and when the instruction runs on a computer, a processor performs the methods in the foregoing aspects.

According to a twelfth aspect, this application further provides a computer program product including an instruction. When the instruction runs on a computer, the computer performs the methods in the foregoing aspects.

According to a thirteenth aspect, this application further provides a chip system, including a processor, configured to perform the methods in the foregoing aspects.

According to a fourteenth aspect, this application further provides a communications system, including a terminal device configured to perform the method in any implementation of the first aspect and a network device configured to perform the method in any implementation of the second aspect.

According to the device positioning method and the assisted positioning method provided in this application, the to-be-positioned device can be effectively positioned by using landmark information and recognition and calculation capabilities of the to-be-positioned device.

### BRIEF DESCRIPTION OF DRAWINGS

FIG. 1 is a schematic diagram of a landmark;
FIG. 2 is a schematic diagram of a network architecture according to an embodiment of this application;
FIG. 3-1 is a schematic diagram of a landmark according to an embodiment of this application;
FIG. 3-2 is a schematic diagram of another landmark according to an embodiment of this application;
FIG. 4-1 is a schematic flowchart of a positioning method according to Embodiment 1 of this application;
FIG. 4-2 is a schematic flowchart of another positioning method according to Embodiment 1 of this application;
FIG. 5 is a structural block diagram of a positioning apparatus according to Embodiment 2, Embodiment 5, and Embodiment 8 of this application;
FIG. 6 is a structural block diagram of an assisted positioning apparatus according to Embodiment 3, Embodiment 6, and Embodiment 9 of this application;
FIG. 7-1 is a schematic flowchart of a positioning method according to Embodiment 4 of this application;
FIG. 7-2 is a schematic flowchart of another positioning method according to Embodiment 4 of this application;
FIG. 8-1 is a schematic flowchart of a positioning method according to Embodiment 7 of this application;
FIG. 8-2 is a schematic flowchart of another positioning method according to Embodiment 7 of this application;
FIG. 9-1 is a schematic flowchart of a positioning method according to Embodiment 10 of this application;
FIG. 9-2 is a schematic flowchart of another positioning method according to Embodiment 10 of this application;
FIG. 10 is a structural block diagram of a positioning apparatus according to Embodiment 11 of this application;
FIG. 11 is a structural block diagram of an assisted positioning apparatus according to Embodiment 12 of this application; and
FIG. 12 is a schematic structural diagram of a to-be-positioned device or an assisted positioning device according to an embodiment of this application.

### DESCRIPTION OF EMBODIMENTS

To make the objectives, technical solutions, and advantages of this application clearer, the following describes this application more comprehensively with reference to the accompanying drawings.

This application may be implemented in different forms, and the forms should not be construed as being limited to the embodiments provided in this specification. The embodiments provided are intended to make the disclosure of this specification comprehensive and complete, to convey the protection scope of this application to a person skilled in the art more comprehensively.

In this specification, terms such as "include" and "contain" indicate cases in which the technical solutions of the embodiments of this application include other units and steps that are not directly or expressly stated, in addition to units and steps that are directly and expressly stated in the specification and claims.

Various numbers such as first and second in this application are merely for distinguishing for ease of description, and are not intended to limit the scope of the embodiments of this application or limit a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "at least one" means one or more. At least two means two or more. "at least one", "any one", or a similar expression means any combination of these items, including any combination of one or more of the items. For example, at least one of a, b, and c may indicate a, b, c, a and b, a and c, b and c, or a, b, and c, where a, b, and c may be singular or plural. "a plurality of" means two or more, and another quantifier is similar to this. In addition, elements (element) of singular forms "a", "an" and "the" do not mean there is "one or only one" such elements but "one or more" such elements unless specified in the context. For example, "a device" means one or more such devices.

The embodiments of this application may be applied to a plurality of occasions requiring positioning, including areas in which a satellite positioning signal is weak, for example, a parking lot, a tunnel, a bridge, a remote mountain area, a mountain and a canyon, and a city block blocked by a tall building, a tree, or the like. The technical solutions of this application may be specifically applied to various communications networks, for example, a global system for mobile communications (Global system for mobile communications, GSM for short), code division multiple access (Code Division Multiple Access, CDMA for short), wideband code division multiple access (Wideband Code Division Multiple Access, WCDMA for short), and time division-synchronous code division multiple access (Time Division-Synchronous Code Division Multiple Access, TD-WCDMA for short), a universal mobile telecommunications system (Universal Mobile Telecommunications System, UMTS for short), and a long term evolution (Long Term Evolution, LTE for short) system. With continuous development of communications technologies, the technical solutions of this application may be further applied to a future network such as a 5G system, which may also be referred to as a new radio (New Radio, NR for short) system, or may be applied to a device-to-device (device to device, D2D for short) system, amachine-to-machine (machine to machine, M2M for short) system, or the like.

FIG. 2 is a schematic diagram of a network architecture according to an embodiment of this application. In a positioning scenario, an assisted positioning device 101 and to-be-positioned devices 111 and 112 are included.

It may be understood that the system may include a plurality of assisted positioning devices 101 and a plurality of to-be-positioned devices 111 and 112.

Specifically, the assisted positioning device 101 may be a local server disposed in a parking lot, a tunnel, a bridge, or the like, or a cloud server, or may be a roadside device or another device with a communication function. For example, the assisted positioning device 101 may be an evolved NodeB (evolutional node B, eNB) in an LTE system, may be a base transceiver station (base transceiver station, BTS) in a global system for mobile communications (global system of mobile communication, GSM) or a code division multiple access (code division multiple access, CDMA) system, or may be a NodeB (nodeB, NB) or the like in a wideband code division multiple access (wideband code division multiple access, WCDMA) system, a Wi-Fi access point, a future evolved base station, or the like.

Optionally, the assisted positioning device 101 may be another to-be-positioned device, a handheld mobile terminal device, or the like with a device-to-device (Device-to-Device, D2D) communication capability. For example, when the to-be-positioned device 111 has limited perception and calculation capabilities, the to-be-positioned device 111 may request the to-be-positioned device 112 with relatively high perception and calculation capabilities to assist in positioning the to-be-positioned device 111. Optionally, the to-be-positioned device 112 sends feature information and location information of at least one landmark to the to-be-positioned device 111. Optionally, the to-be-positioned device 112 may parse the feature information of the first landmark that is obtained by a sensor of the to-be-positioned device 111, determine corresponding location information, and send the corresponding location information to the to-be-positioned device 111. In the following embodiments, an example in which an assisted positioning device is a device 101 disposed in a parking lot is used for description.

The to-be-positioned devices 111 and 112 may be devices with a wireless transceiving function, chips disposed in devices with a wireless transceiving function, or background servers. For example, the to-be-positioned device may be a vehicle, an in-vehicle terminal, a mobile phone (mobile phone), a tablet computer (Pad), a computer with a wireless transceiving function, a virtual reality (virtual reality, VR) terminal, an augmented reality (augmented reality, AR) terminal, a wireless terminal in industrial control (industrial control), a wireless terminal in self-driving (self driving), a wireless terminal in remote medical treatment (remote medical), a wireless terminal in a smart grid (smart grid), a wireless terminal in transportation safety (transportation safety), a wireless terminal in a smart city (smart city), a wireless terminal in a smart home (smart home), or the like.

In the following embodiments, the technical solutions are described by using an example in which the to-be-positioned device 111 is a vehicle, and the assisted positioning device 101 is a device that provides an assisted positioning function in a parking lot.

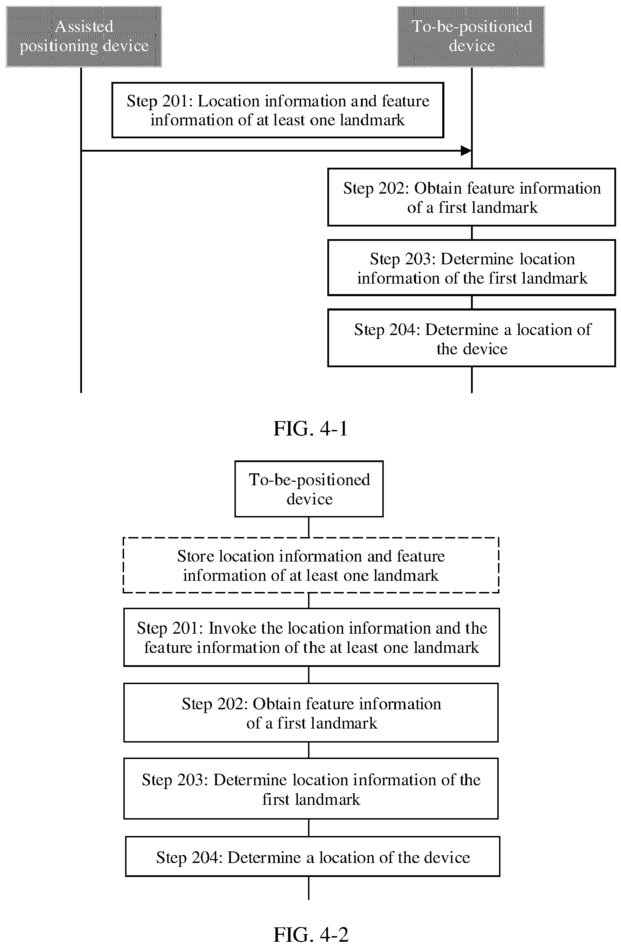

Embodiment 1 of this application provides a device positioning method. Refer to a schematic diagram of a method shown in FIG. 4-1.

Specific steps in Embodiment 1 are as follows.

Step 201: The assisted positioning device 101 sends location information of at least one landmark and feature information of the at least one landmark. Correspondingly, the vehicle 111 receives the location information of the at least one landmark and the feature information of the at least one landmark.

In step 201, the assisted positioning device 101 may actively send, in a unicast, multicast, or broadcast manner, a message to the vehicle 111 that enters a parking lot. For example, the assisted positioning device 101 continuously performs broadcasting to a parking area at a specific frequency within a working time (preset by a parking lot operator), in other words, periodically sends a broadcast message to the parking area. The broadcast message includes location information and feature information of all landmarks in the parking lot or landmarks in some areas of the parking lot. It may be understood that the assisted positioning device 101 may also establish a one-to-one communication link with the vehicle 111, and send a message that includes the location information of all landmarks or landmarks in some areas of the parking lot to the vehicle 111 in a unicast manner.

Further optionally, the location information of the at least one landmark and the feature information of the at least one landmark may be carried in a same message, or may be carried in different messages. For example, the location information of the at least one landmark is carried in one message, and the feature information of the at least one landmark is carried in another message. Alternatively, location information and/or feature information of some landmarks are or is in one message, and location information and/or feature information of other landmarks are or is in another message. A quantity of messages carrying the location information of the at least one landmark and the feature information of the at least one landmark is not limited in the embodiments of this application.

Specifically, location information of a landmark may be absolute location information, or may be relative location information. Generally, the absolute location information of the landmark may be accurately described by using three pieces of conventional location data: longitude coordinates, latitude coordinates, and altitude coordinates. For example, world geodetic system (World Geodetic System, WGS) coordinates may be used. The relative location information is coordinates of the landmark relative to a reference coordinate system or coordinates in a local range. In an example of a ground parking lot, assuming that a two-dimensional coordinate system is established by using an entrance location of the parking lot as an origin (0, 0) of the coordinate system, each landmark in the parking lot has corresponding two-dimensional coordinates in the coordinate system. For another example, a large parking lot may include a plurality of layers, for example, a basement level 1, a basement level 2, a level B1, or a level B2, that may be used to park a vehicle. In this case, location information of a landmark may include a quantity of layers of a parking lot in which the landmark is located, and the quantity of layers reflects height or altitude information of the landmark to some extent. For another example, based on a geographical location, a large parking lot may be partitioned into a plurality of different zones such as a zone A, a zone B, and a zone C, and different zones include a specific quantity of parking spaces. The parking lot is partitioned to facilitate parking space management and also make it convenient for a vehicle owner to search for a vehicle. In this case, location information of a landmark may also include information about a zone in which the landmark is located. For another example, location information of a landmark may also include azimuth information, information about a distance from a reference point, and the like of the landmark.

It should be noted that location information of a landmark may be a combination of absolute location information and relative location information. For example, absolute longitude coordinates and absolute latitude coordinates are used as longitude and latitude information of a landmark, and floor information is used as altitude information of the landmark.

It should be noted that the location information of the at least one landmark may include location information of one or more reference landmarks, and location information of another landmark may be relative location information with reference to at least one of the location information of the one or more reference landmarks.

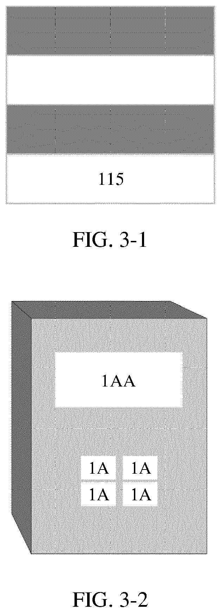

Feature information of a landmark includes pattern information and/or identification information. The pattern information may be information such as a length, a width, and a height of the landmark. It should be noted that the landmark may also be planar, in other words, the pattern information includes only information such as a length and a width. The pattern information may be alternatively an image with an obvious feature or attribute for assisted positioning, for example, an image of a "zebra crossing" alternating between gray and white shown in FIG. 3-1. The pattern information may be alternatively an image encoded and generated according to a specific rule, or a two-dimensional code image, as shown in FIG. 1. The identification information is a number, an index, or other information that may uniquely identify the landmark.

In addition, it should be noted that the pattern information may also be used as identification information, provided that the pattern information can uniquely identify the landmark. For example, a landmark in the prior art is shown in FIG. 1, and different codes have different patterns. If a landmark has unique pattern information, the pattern information may also be used as identification information.

There is a mapping relationship between the location information of the at least one landmark and the feature information of the at least one landmark. Specifically, location information of landmarks is in a one-to-one correspondence with feature information of the landmarks, which may also mean that attribute information of a landmark includes location information of the landmark and feature information of the landmark.

FIG. 3-2 is a schematic diagram of feature information of another landmark. Pattern information of the landmark may include: A shape is a vertical cuboid, length, width, and height values are approximately 30 cm^{∗}20 cm^{∗}40 cm, there is an upper code area and a lower code area, and the upper code area is in a light color. Identification information of the landmark includes two parts, namely, the upper code area and the lower code area. Identification information "1AA" is displayed in the upper code area, identification information "1A, 1A, 1A, 1A" is displayed in the lower code area, and each part of identification information corresponds to a unique identity of the landmark.

Table 1 provides an example of a mapping relationship between feature information and location information of landmarks.

**Table 1 Feature information and location information of landmarks**

| Feature information of a landmark | Location information of the landmark |
|---|---|
| A shape is a vertical cuboid, length, width, and height values are approximately 30 cm^{∗}20 cm^{∗}40 cm, and identification information includes "1AA" and/or "1A, 1A, 1A, 1A" | (Level B1, zone A, near a southeastern entrance, ..., and parking spaces 000-010) |
| A shape is a vertical cuboid, length, width, and height values are approximately 30 cm^{∗}20 cm^{∗}40 cm, and identification information includes "1AB" and/or "1A, 1A, 1A, 1B" | (Level B1, zone A, near the southeastern entrance, ..., and parking spaces 010-020) |
| A shape is a vertical cuboid, length, width, and height values are approximately 30 cm^{∗}20 cm^{∗}40 cm, and identification information includes "1AC" and/or "1A, 1A, 1A, 1C" | (Level B1, zone A, near the southeastern entrance, ..., and parking spaces 010-020) |
| ... | ... |
| A shape is a vertical cuboid, length, width, and height values are approximately 30 cm^{∗}20 cm^{∗}40 cm, and identification information includes "9ZZ" and/or "9Z, 9Z, 9Z, 9Z" | (Level B4, zone F, near a northeastern entrance, ..., and parking spaces 590-600) |

In another implementation of step 201, as shown in FIG. 4-2, if the vehicle 111 stores the location information and the feature information of the at least one landmark, the vehicle 111 does not need to receive information from the parking lot during positioning. Step 201 is specifically performed as follows: Only the location information and the feature information of the at least one landmark need to be internally read. For example, the vehicle 111 previously enters the parking lot, the vehicle stores a high-precision map of the parking lot, and the map includes the location information and the feature information of the at least one landmark. According to this implementation, when the vehicle 111 enters the parking lot, positioning can be implemented through calculation and parsing by using a perception capability of the vehicle without information exchange with a unit other than the vehicle. Therefore, information exchange in the positioning process is reduced, and the vehicle can be more quickly positioned.

Further, the foregoing two implementations of obtaining the feature information of the at least one landmark and the location information of the at least one landmark may be used separately or in combination. For example, location information and feature information of some landmarks are obtained by receiving information, and location information and feature information of other landmarks are prestored; or location information and feature information are preferentially obtained from prestored information, and location information and feature information of a landmark that are not prestored may be obtained by receiving information; or location information and feature information of a landmark that are included in received information are used to update or overwrite prestored location information and feature information of the landmark. For example, if the prestored information has been stored over a specific time, or the prestored information and the received information include inconsistent location information or feature information of a same landmark, or some or all of the prestored information is not included in the received information (for example, one landmark or some landmarks fail), the location information and the feature information of the landmark in the received information are used. A specific obtaining manner is not limited in the embodiments of this application.

It may be understood that different parking lots may use totally different landmarks. A vehicle may flexibly obtain location information and feature information of landmarks in different parking lots through communication using a vehicle-to-everything (vehicle to everything, V2X) technology.

Step 202: The vehicle 111 obtains feature information of a first landmark of the vehicle.

The first landmark may be a nearby landmark (the nearby landmark is one landmark and is denoted as a landmark 1) of the vehicle 111.

Specifically, the vehicle 111 obtains the feature information of the nearby landmark of the vehicle 111 by using a sensing unit such as an in-vehicle camera.

It may be understood that there may be one or more first landmarks, and this is not limited in this application. When there are a plurality of first landmarks, the vehicle 111 may be further more accurately positioned based on a relative location relationship between the plurality of first landmarks.

Step 203: The vehicle 111 determines location information of the landmark 1 based on the feature information of the landmark 1.

Specifically, based on the feature information of the landmark 1, the vehicle 111 can recognize the location information of the landmark 1 based on the correspondence (for example, the correspondence shown in Table 1), which is obtained in step 201, between the location information and the feature information of the at least one landmark.

Step 204: The vehicle 111 determines a location of the vehicle 111 based on the location information of the landmark 1.

Specifically, different automated driving function applications may have different positioning accuracy requirements on the vehicle.

Optionally, if a positioning accuracy requirement is low, the vehicle 111 directly uses the location information of the landmark 1 as location information of the vehicle.

Optionally, the vehicle 111 may determine location information of the vehicle 111 with reference to the location information of the landmark 1 according to another positioning method. For example, the vehicle 111 has a capability of recognizing a lane line in the parking lot. Based on the recognized lane line, the vehicle 111 can certainly determine a horizontal location of the vehicle 111 on a road, and then determine a vertical location of the vehicle 111 based on the recognized location information of the landmark 1. In this way, the vehicle 111 determines two-dimensional location information of the vehicle 111 in the parking lot. For another example, the vehicle 111 determines an approximate location with reference to a high-precision map, and further optimizes the determined location information of the vehicle 111 with reference to the location information of the landmark 1.

It should be noted that the location of the vehicle 111 may be a location of a reference point (a first reference point) on the vehicle.

Optionally, the location of the reference point (the first reference point) may be a location of a center of a front axle of the vehicle, a location of a central point of a rear axle of the vehicle, or a location of a central point of the vehicle.

Optionally, the location of the central point of the vehicle may be a location of a central point of a cube formed by the vehicle.

Optionally, the location of the vehicle may be a location of a second reference point onto which the first reference point is projected on a road plane. For example, the location of the vehicle is a location of a reference point onto which the location of the central point of the vehicle is projected on the road plane.

It should be noted that the method in the embodiments of this application may be performed by the vehicle or an apparatus inside the vehicle, to position the vehicle, or may be performed by an apparatus outside the vehicle, to position the vehicle, and this is not limited in the embodiments of this application. When the method is performed by the apparatus outside the vehicle, the method further includes steps related to communication between the apparatus outside the vehicle and the vehicle. For example, in step 202, the apparatus outside the vehicle obtains the feature information of the first landmark from the vehicle.

In Embodiment 1 of this application, there is no fixed sequence of step 202 and step 201, in other words, step 201 may be performed before step 202, or step 202 is performed before step 201, or step 201 and step 202 are simultaneously performed. This is not limited in this application.

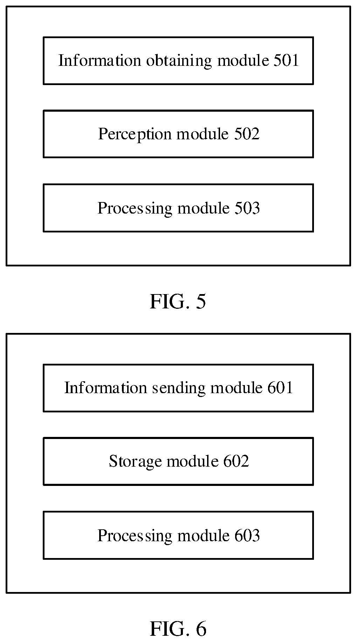

As shown in FIG. 5, Embodiment 2 of this application provides a vehicle positioning apparatus, configured to implement the steps in the method in Embodiment 1. The apparatus may be installed on the to-be-positioned device, namely, the vehicle 111, and includes an information obtaining module 501, a perception module 502, and a processing module 503.

The information obtaining module 501 is configured to perform a function of the vehicle 111 in step 201.

Corresponding to the foregoing two implementations of the process in which the vehicle 111 obtains location information and feature information of at least one landmark, the information obtaining module 501 may be an information receiving unit, or may be the processing module 503. When the information obtaining module 501 is an information receiving unit, the information obtaining module 501 is configured to receive landmark information sent by a parking lot. When the information obtaining module 501 is the processing module 503, the information obtaining module 501 is configured to read map information of a parking lot that is stored in the vehicle 111, where the map information includes location information and feature information of at least one landmark.

The perception module 502 is configured to perform a function of the vehicle 111 in step 202.

The perception module 502 is configured to obtain feature information of a landmark 1, and the perception module 502 may be a sensing unit such as an in-vehicle camera. The in-vehicle camera can obtain the feature information of the landmark 1 by collecting an image of the landmark 1. The collected feature information of the landmark 1 includes pattern information and/or identification information of the landmark 1. For example, length information, width information, code information, a number, and an index of the landmark 1 are collected.

The processing module 503 is configured to perform functions of the vehicle 111 in step 203 and step 204.

The processing module 503 is configured to obtain location information of the landmark 1 through parsing. The processing module 503 can obtain the location information of the landmark 1 based on the feature information of the landmark 1 that is obtained by the perception module 502 and a correspondence, which is obtained by the information obtaining module 501, between the location information and the feature information of the at least one landmark.

The positioning apparatus can determine a location of the vehicle 111 based on the obtained location information of the landmark 1.

For specific functions, refer to Embodiment 1. Details are not described herein again.

It should be noted that the vehicle positioning apparatus in the embodiments of this application may be the vehicle or an apparatus inside the vehicle, to position the vehicle, or may be an apparatus outside the vehicle, to position the vehicle, and this is not limited in the embodiments of this application. When the apparatus is an apparatus outside the vehicle, the perception module 502 may be replaced with the information obtaining module, configured to obtain the perceived feature information of the first landmark and the like from the vehicle.

As shown in FIG. 6, Embodiment 3 of this application provides an assisted positioning apparatus, configured to implement the assisted positioning steps in the positioning method in Embodiment 1. The assisted positioning apparatus includes an information sending module 601, a storage module 602, and a processing module 603. The assisted positioning apparatus is installed, for example, in a parking lot, and is used to provide assisted positioning for a vehicle in a parking lot.

Specifically,
the sending module 601 may perform a function of the assisted positioning device 101 in step 201;
the storage module 602 stores mapping relationship data between feature information and location information of at least one landmark, where the at least one landmark may be all landmarks in the parking lot, or may be landmarks in some areas of the parking lot; and
the processing module 603 is configured to: invoke the feature information and the location information of the at least one landmark in the storage module 602, and send the feature information and the location information of the at least one landmark by using the sending module 602.

According to this solution, the assisted positioning device 101 may actively send the location information and the feature information of the at least one landmark to the vehicle 111, where the sending is performed in a unicast manner, a multicast manner, a broadcast manner, or the like. Based on received landmark information, the vehicle 111 can determine location information of a landmark 1 after obtaining feature information of the landmark 1, to determine a location of the vehicle. The assisted positioning apparatus has a simple function, and can effectively help the vehicle in the parking lot complete positioning.

For specific functions, refer to Embodiment 1. Details are not described herein again.

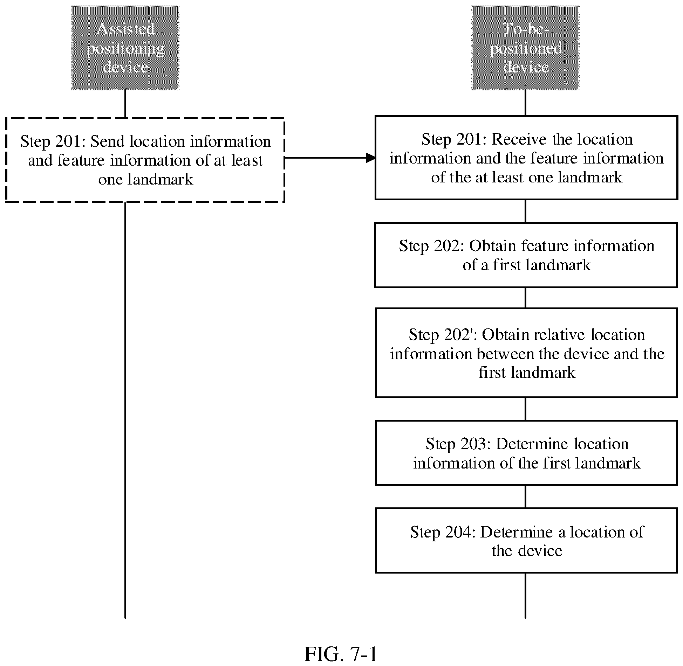

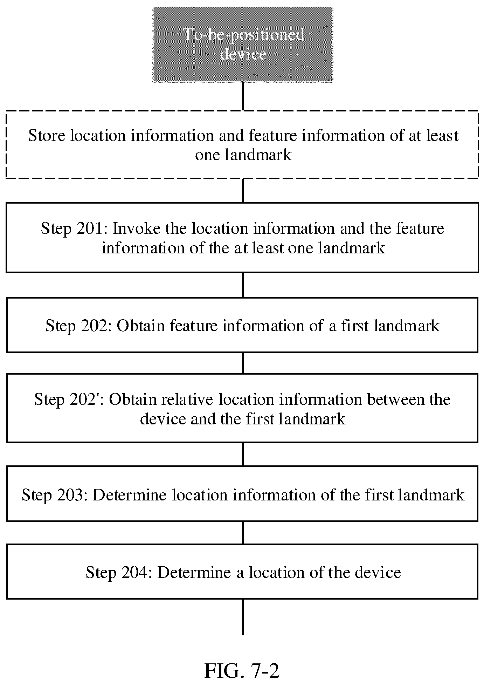

Embodiment 4 of this application provides another device positioning method. Refer to schematic diagrams of methods shown in FIG. 7-1 and FIG. 7-2.

Based on Embodiment 1, Embodiment 4 further includes the following steps.

Step 202': The vehicle 111 obtains relative location information between the vehicle and the landmark 1.

Specifically, the vehicle 111 obtains the relative location information between the vehicle 111 and the landmark 1 by using a sensing unit such as an in-vehicle radar. The relative location information may be information such as an azimuth and a distance of a specific location point of the vehicle 111 relative to the landmark 1. For example, the specific location point may be a location of a first reference point or a location of a second reference point. Alternatively, the relative location information may be information such as an azimuth and a distance of a distance sensing unit (for example, an in-vehicle radar) in the vehicle 111 relative to the landmark 1. It may be understood that when the vehicle 111 includes a plurality of sensing units, the relative location information between the vehicle and the landmark 1 may be relative location information between one of the sensing units (for example, a sensor closest to the landmark 1 or a sensor responsible for recognizing the landmark 1) and the landmark 1, or may be relative location information between each of the plurality of sensing units and the landmark 1. This is not limited in the embodiments of this application.

Step 202' is performed before step 204, for example, may be performed at the same time as step 202, or performed between step 202 and step 203, or performed at the same time as step 203, or performed between step 203 and step 204. The implementation steps in the positioning method are not limited in this application.

Further, a specific implementation of step 204 may be as follows: The vehicle 111 calculates a specific location of the vehicle based on the location information of the landmark 1 and the relative location information between the vehicle 111 and the landmark 1.

In a feasible implementation, the vehicle 111 determines, based on the location information of the landmark 1, relative location information between a first sensor and the landmark 1, and relative location information between a vehicle reference point and the first sensor, location information corresponding to the vehicle reference point.

In another feasible implementation, the vehicle 111 determines, based on the location information of the landmark 1, relative location information between a first sensor and the landmark 1, relative location information between a second sensor and the landmark 1, and relative location information between a vehicle reference point and each of the first sensor and the second sensor, location information corresponding to the vehicle reference point.

It may be understood that the vehicle 111 may also determine the specific location of the vehicle with reference to other information such as high-precision map information.

Embodiment 5 of this application correspondingly provides another device positioning apparatus, as shown in FIG. 5. The apparatus is configured to implement the steps in the positioning method in Embodiment 4. Specifically, the positioning apparatus may be installed on the vehicle 111, and includes an information obtaining module 501, a perception module 502, and a processing module 503.

The information obtaining module 501 is configured to perform a function of the vehicle 111 in step 201.

The perception module 502 is configured to perform a function of the vehicle 111 in step 202, and is configured to perform a function of the vehicle 111 in step 202'.

The processing module 503 is configured to perform functions of the vehicle 111 in step 203 and step 204.

Embodiment 6 of this application further provides an assisted positioning apparatus, configured to implement the steps in the positioning method in Embodiment 4. As shown in FIG. 6, the assisted positioning apparatus includes an information sending module 601, a storage module 602, and a processing module 603. The assisted positioning apparatus is installed, for example, in a parking lot, and is used to provide assisted positioning for the vehicle 111 in the parking lot.

Specifically,
the sending module 601 may perform a function of the assisted positioning device 111 in step 201;
the storage module 602 stores mapping relationship data between feature information and location information of at least one landmark, where the at least one landmark may be all landmarks in the parking lot, or may be landmarks in some areas of the parking lot; and
the processing module 603 is configured to: invoke the feature information and the location information of the at least one landmark in the storage module 602, and send the feature information and the location information of the at least one landmark by using the sending module 602.

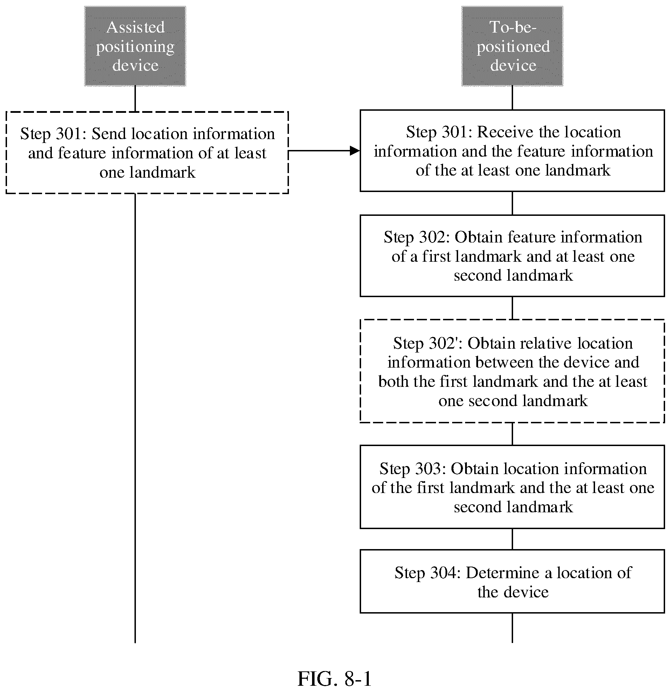

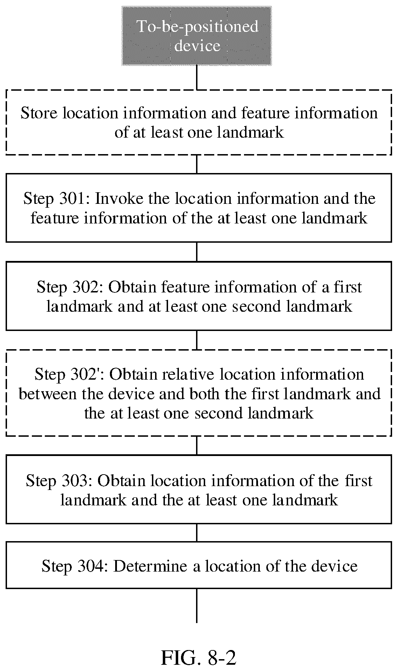

Embodiment 7 of this application provides another device positioning method. Refer to schematic diagrams of methods shown in FIG. 8-1 and FIG. 8-2.

Embodiment 7 of this application makes changes to specific actions performed in steps 202, 202', and 203 on the basis of Embodiment 1 and/or Embodiment 4. Specific steps in Embodiment 7 are as follows.

In an implementation of step 301, as shown in FIG. 8-1, the assisted positioning device 101 sends location information of at least one landmark and feature information of the at least one landmark, and correspondingly, the vehicle 111 receives the location information of the at least one landmark and the feature information of the at least one landmark. The at least one landmark may be all landmarks in a parking lot, or may be landmarks in some areas of a parking lot.

In another implementation of step 301, as shown in FIG. 8-2, the vehicle 111 stores location information and feature information of at least one landmark, and in step 301, an invoking action is performed to invoke the location information and the feature information of the at least one landmark. The at least one landmark may be all landmarks in a parking lot, or may be landmarks in some areas of a parking lot.

Step 301 is similar to step 201, and details are not described again.

Step 302: The vehicle 111 obtains feature information of a nearby landmark 1 of the vehicle and at least one second landmark (for example, a landmark 2, a landmark 3, ..., and a landmark N, where N≥2).

Specifically, the vehicle 111 obtains the feature information of the landmark 1, the landmark 2, the landmark 3, ..., and the landmark N by using a sensing unit such as an in-vehicle camera.

It should be noted that the feature information of the plurality of landmarks may be obtained by one sensor, or may be obtained by a plurality of sensors. Redundancy or repetition may occur between the obtained information. For example, a first sensor may obtain feature information of the landmark 1 and the landmark 2, a second sensor obtains feature information of the landmark 1 and the landmark 3, and a third sensor obtains feature information of the landmark 4.

A specific obtaining manner is similar to that in step 202, and details are not described again.

Step 302': The vehicle 111 obtains relative location information between the vehicle and the landmark 1, and obtains relative location information between the vehicle and each of the landmark 2, the landmark 3, ..., and the landmark N.

Step 302' is an optional step. In the positioning method provided in Embodiment 7, step 302' may be omitted, and a vehicle positioning purpose can also be completed. Step 302' is performed before step 304, for example, may be performed at the same time as step 302, or performed between step 302 and step 303, or performed at the same time as step 303, or performed between step 303 and step 304. The implementation steps in the positioning method are not limited in Embodiment 7.

It should be noted that obtaining relative location information between the vehicle and the landmark 1, ..., and the landmark N may be obtaining relative location information between M sensors and N landmarks. Both M and N are integers. There may be a one-to-one correspondence, a many-to-one correspondence, or a one-to-many correspondence between M and N, and this is not limited in the present invention. For example, the first sensor may obtain relative location information between the vehicle and both the landmark 1 and the landmark 2, and the second sensor obtains relative location information between the vehicle and the landmark 3.

Step 303: The vehicle 111 determines location information of the landmark 1, the landmark 2, the landmark 3, ..., and the landmark N based on the feature information of the landmark 1, the landmark 2, the landmark 3, ..., and the landmark N.

Specifically, based on the feature information of the landmark 1, the vehicle 111 can recognize the location information of the landmark 1 based on the correspondence (for example, the correspondence shown in Table 1), which is obtained in step 301, between the location information and the feature information of the at least one landmark. Similarly, the vehicle 111 can recognize the location information of the landmark 2, the landmark 3, ..., and the landmark N based on the feature information of the landmark 2, the landmark 3, ..., and the landmark N.

Step 304: The vehicle 111 determines a location of the vehicle 111 based on the location information, which is determined in step 303, of the landmark 1, the landmark 2, the landmark 3, ..., and the landmark N.

Correspondingly, when the optional step 302' is performed, step 304 is specifically: determining the location of the vehicle 111 based on the relative location information between the vehicle 111 and the landmark 1 that is obtained in step 302', the relative location information between the vehicle 111 and each of the landmark 2, the landmark 3, ..., and the landmark N that is obtained in step 302', and the location information, which is determined in step 303, of the landmark 1, the landmark 2, the landmark 3, ..., and the landmark N.

In a specific implementation process, the vehicle 111 calculates a location of a vehicle reference point based on location information of each landmark, relative location information between the vehicle 111 and each landmark, and relative location information between a sensor and the vehicle reference point. According to the method, a deviation that may occur in a positioning process by using a single landmark can be reduced, thereby improving vehicle positioning accuracy.

Embodiment 8 of this application provides another device positioning apparatus. The apparatus has a functional structure shown in FIG. 5, and is configured to implement the steps in the positioning method provided in Embodiment 7. Specifically, the positioning apparatus may be installed on the vehicle 111, and includes an information obtaining module 501, a perception module 502, and a processing module 503.

The information obtaining module 501 is configured to perform a function of the vehicle 111 in step 301.

The perception module 502 is configured to perform a function of the vehicle 111 in step 302, and is configured to perform a function of the vehicle 111 in step 302'.

The processing module 503 is configured to perform functions of the vehicle 111 in step 303 and step 304.

Embodiment 9 of this application provides an assisted positioning apparatus, as shown in FIG. 6. The apparatus is configured to implement the foregoing positioning method. The assisted positioning apparatus includes an information sending module 601, a storage module 602, and a processing module 603. The assisted positioning apparatus is installed, for example, in a parking lot, and is used to provide assisted positioning for the vehicle 111 in the parking lot.

Specifically,
the sending module 601 may perform a function of the assisted positioning device in step 301;
the storage module 602 stores mapping relationship data between feature information and location information of at least one landmark, where the at least one landmark may be all landmarks in the parking lot, or may be landmarks in some areas of the parking lot; and
the processing module 603 is configured to: invoke the feature information and the location information of the at least one landmark in the storage module 602, and send the feature information and the location information of the at least one landmark by using the sending module 602.

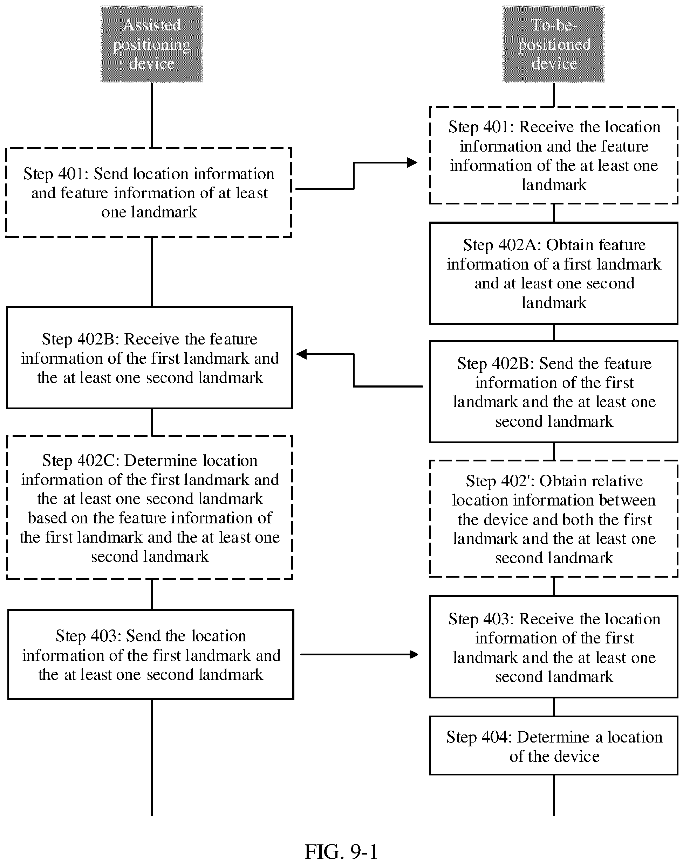

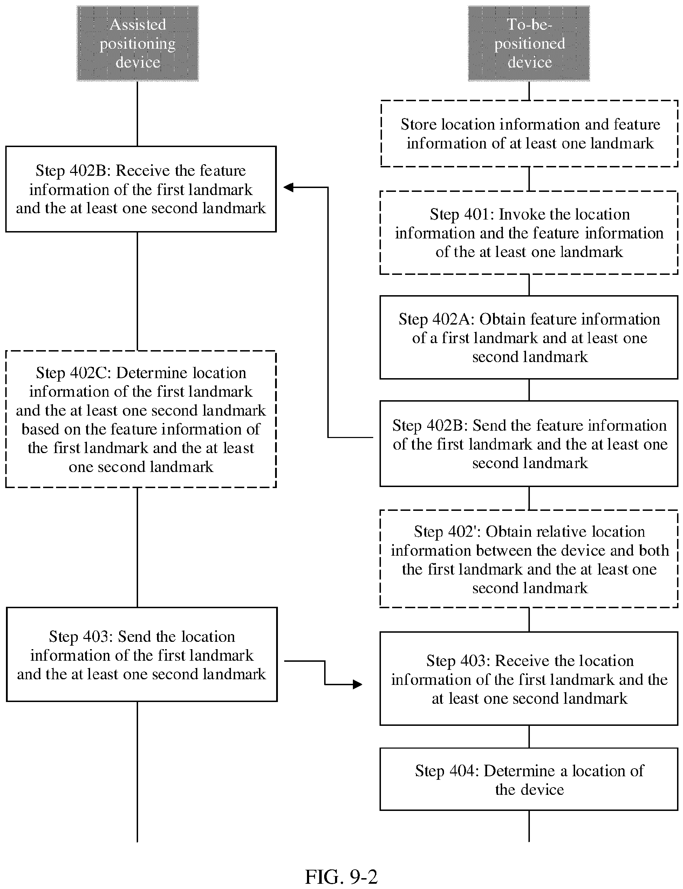

Embodiment 10 of this application provides another device positioning method. Refer to schematic diagrams of methods shown in FIG. 9-1 and FIG. 9-2.

Based on Embodiment 1, Embodiment 4, or Embodiment 7, in Embodiment 10, when the vehicle 111 cannot complete step 203 or step 303, in other words, when the vehicle 111 cannot determine location information of a landmark 1 and/or a landmark 2, a landmark 3, ..., and a landmark N, the vehicle 111 completes this step by using the assisted positioning device 101 in a parking lot.

Specifically, the vehicle 111 sends first information including feature information of the landmark 1 and/or the landmark 2, the landmark 3, ..., and the landmark N to the assisted positioning device 101, and the assisted positioning device 101 obtains the location information of the landmark 1 and/or the landmark 2, the landmark 3, ..., and the landmark N through parsing based on the feature information of the landmark 1 and/or the landmark 2, the landmark 3, ..., and the landmark N, and then sends the location information of the landmark 1 and/or the landmark 2, the landmark 3, ..., and the landmark N to the vehicle 111.

It can be understood that there may be diverse reasons why the vehicle 111 cannot complete step 203 or step 303. For example, in step 201 or step 301, if the vehicle 111 does not successfully obtain the location information and the feature information of the landmark 1 and/or the landmark 2, the landmark 3, ..., and the landmark N from the assisted positioning device 101, and the vehicle 111 does not store the location information and the feature information of the landmark 1 and/or the landmark 2, the landmark 3, ..., and the landmark N, either, or an error occurs when the vehicle 111 invokes stored information, the vehicle 111 cannot obtain a mapping relationship between location information and feature information of a landmark. Therefore, the vehicle 111 cannot obtain the location information of the landmark 1 and/or the landmark 2, the landmark 3, ..., and the landmark N.

Alternatively, for example, if in step 202 or step 302, a lighting condition of the parking lot or resolution of a sensing unit of the vehicle 111 is insufficient, or in step 203 or step 303, the vehicle 111 has an insufficient parsing or calculation capability, the vehicle 111 cannot determine the location information of the landmark 1 and/or the landmark 2, the landmark 3, ..., and the landmark N.

An application scenario of Embodiment 10 may be alternatively as follows: Based on the positioning method in Embodiment 1, Embodiment 4, or Embodiment 7, to simplify execution actions of the vehicle 111, the vehicle 111 does not perform step 201 or step 301, nor performs step 203 or step 303, in other words, the vehicle 111 does not perform parsing on feature information of a nearby landmark, but performs only step 202 or step 302, then sends obtained feature information of the nearby landmark, namely, a landmark 1, and/or a landmark 2, a landmark 3, ..., and a landmark N to the assisted positioning device 101 for parsing, and receives location information of the landmark 1 and/or the landmark 2, the landmark 3, ..., and the landmark N that is sent by the assisted positioning device 101.

The following describes a specific implementation of Embodiment 10.

In a first implementation of step 401, as shown in FIG. 9-1, the assisted positioning device 101 sends location information of at least one landmark and feature information of the at least one landmark, and correspondingly, the vehicle 111 receives the location information of the at least one landmark and the feature information of the at least one landmark. The at least one landmark may be all landmarks in a parking lot, or may be landmarks in some areas of a parking lot.

In another implementation of step 401, as shown in FIG. 9-2, the vehicle 111 stores location information and feature information of at least one landmark, and in step 401, an invoking action is performed to invoke the location information and the feature information of the at least one landmark. The at least one landmark may be all landmarks in a parking lot, or may be landmarks in some areas of a parking lot.

Step 401 is an optional step. In the positioning method provided in Embodiment 10, step 401 may be omitted, and a purpose of positioning the vehicle 111 can also be completed.

Step 402A: The vehicle 111 obtains feature information of a landmark 1 and/or a landmark 2, a landmark 3, ..., and a landmark N.

Specifically, the vehicle 111 obtains the feature information of a nearby landmark, namely, the landmark 1, and/or the landmark 2, the landmark 3, ..., and the landmark N by using a sensing unit such as an in-vehicle camera.

Step 402B: The vehicle 111 sends the feature information of the landmark 1 and/or the landmark 2, the landmark 3, ..., and the landmark N to the assisted positioning device 101. Correspondingly, the assisted positioning device 101 receives the feature information of the landmark 1 and/or the landmark 2, the landmark 3, ..., and the landmark N.

Step 402C: Corresponding to step 402B, the assisted positioning device 101 obtains location information of the landmark 1 and/or the landmark 2, the landmark 3, ..., and the landmark N through parsing based on the received feature information of the landmark 1 and/or the landmark 2, the landmark 3, ..., and the landmark N and a correspondence, which is stored in the assisted positioning device 101, between location information and feature information of a plurality of landmarks.

It should be noted that the assisted positioning device 101 may have a stronger calculation capability and a stronger recognition capability, and can recognize information about more details. For example, because the landmark 1 and/or the landmark 2, the landmark 3, ..., and the landmark N are stained, recognition of feature information of the landmarks is affected, but the assisted positioning device 101 can still determine identity information of the landmarks based on stained feature information. Alternatively, for example, code information of a landmark carries other additional information, for example, includes much redundant information, and the assisted positioning device 101 may determine identity information of the landmark based on the redundant information.

It may be understood that, according to step 402A to step 402C, the vehicle 111 obtains the feature information of the landmark 1 and/or the landmark 2, the landmark 3, ..., and the landmark N by using the sensing unit such as the in-vehicle camera, and sends the feature information of the landmark 1 and/or the landmark 2, the landmark 3, ..., and the landmark N to the assisted positioning device 101. The assisted positioning device 101 parses the feature information of the landmark 1 and/or the landmark 2, the landmark 3, ..., and the landmark N based on the feature information of the landmark 1 and/or the landmark 2, the landmark 3, ..., and the landmark N, and obtains the location information of the landmark 1 and/or the landmark 2, the landmark 3, ..., and the landmark N through query.

Step 402': The vehicle 111 obtains relative location information between the vehicle and the landmark 1, or the vehicle 111 obtains relative location information between the vehicle and each of the landmark 1 and/or the landmark 2, the landmark 3, ..., and the landmark N.

Step 402' is an optional step. In the positioning method provided in Embodiment 10, step 402' may be omitted, and a purpose of positioning the vehicle 111 can also be completed. Step 402' is performed before step 404, for example, may be performed at the same time as step 401, step 402A, step 402B, or step 403, or may be performed between step 401, step 402A, step 402B, and step 403. The implementation steps in the positioning method are not limited in Embodiment 10.

Step 403: The assisted positioning device 101 sends the location information of the landmark 1 and/or the landmark 2, the landmark 3, ..., and the landmark N that is obtained through parsing in step 402C to the vehicle 111; and the vehicle 111 receives the location information of the landmark 1 and/or the landmark 2, the landmark 3, ..., and the landmark N.

Step 404: The vehicle 111 determines a location of the vehicle 111 based on the relative location information between the vehicle 111 and the landmark 1 that is obtained in step 402' or the relative location information between the vehicle 111 and each of the landmark 1 and/or the landmark 2, the landmark 3, ..., and the landmark N that is obtained in step 402' and the location information of the landmark 1 and/or the landmark 2, the landmark 3, ..., and the landmark N that is received in step 403.

In a specific implementation process, the vehicle 111 can calculate one piece of location information of the vehicle 111 based on location information of each landmark and relative location information between the vehicle 111 and each landmark; and the vehicle 111 performs weighted averaging on a plurality of pieces of calculated location information, and outputs a final calculation result as location information of the vehicle 111. According to the method, a perception deviation occurring in a phase, for example, ranging, of a positioning process by using a single landmark can be reduced, thereby improving vehicle positioning accuracy.

According to the method provided in Embodiment 10, the vehicle 111 may not need to recognize or obtain, through parsing, identity and location information of a landmark, but instead, the vehicle 111 only needs to perceive feature information (image information) of a nearby landmark by using the sensing unit, and send the feature information (image information) of the nearby landmark to the assisted positioning device 101 in the parking lot, the assisted positioning device 101 performs feature information parsing (image recognition) and determines location information of the landmark, and then the vehicle 111 receives the location information of the nearby landmark that is sent by the assisted positioning device 101, to complete positioning of the vehicle 111.

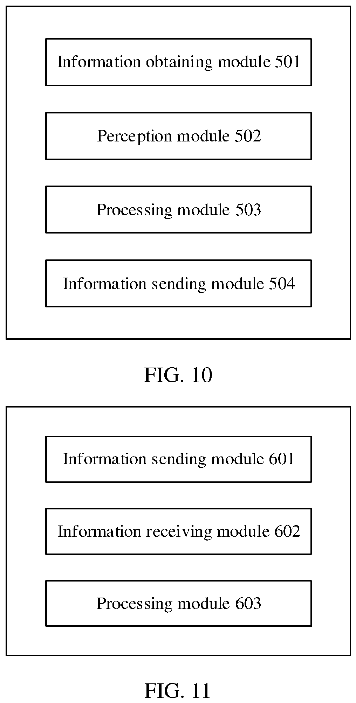

Embodiment 11 of this application provides a positioning apparatus, configured to implement the steps in the positioning method in Embodiment 10. The apparatus is installed on the vehicle 111. As shown in FIG. 10, the positioning apparatus includes an information obtaining module 501, a perception module 502, a processing module 503, and an information sending module 504.

The information obtaining module 501 is configured to perform functions of the vehicle 111 in step 401 and step 403 in Embodiment 10. In addition to receiving location information and feature information of at least one landmark, or invoking location information and feature information of at least one landmark that are stored in the positioning apparatus, the information obtaining module 501 is further configured to receive location information of a landmark 1 and/or a landmark 2, a landmark 3, ..., and a landmark N that is sent by the assisted positioning device 101.

The perception module 502 is configured to perform functions of the vehicle 111 in step 402A and step 402'. The perception module 502 has a function of obtaining feature information (image information) of the landmark 1 and/or the landmark 2, the landmark 3, ..., and the landmark N, and further has a function of obtaining relative location information (a relative azimuth and distance) between the positioning apparatus and each of the landmark 1 and/or the landmark 2, the landmark 3, ..., and the landmark N.

The information sending module 503 is configured to perform a function in step 402B to send the feature information (image information) of the landmark 1 and/or the landmark 2, the landmark 3, ..., and the landmark N that is obtained by the perception module 502 to the assisted positioning device 101.

The processing module 504 is configured to perform a function of the vehicle 111 in step 404. The processing module 504 calculates a location of the vehicle 111 based on relative location information between the positioning apparatus and the landmark 1 that is obtained by the perception module 502 or the relative location information between the positioning apparatus and each of the landmark 1 and/or the landmark 2, the landmark 3, ..., and the landmark N that is obtained by the perception module 502 and the location information of the landmark 1 and/or the landmark 2, the landmark 3, ..., and the landmark N that is received by the information obtaining module 501.

As shown in FIG. 11, Embodiment 12 of this application further provides an assisted positioning apparatus, configured to implement the steps in the positioning method in Embodiment 10. The assisted positioning apparatus includes an information sending module 601, an information receiving module 602, and a processing module 603. The assisted positioning apparatus is disposed in a parking lot or near a parking lot, and is used to provide assisted positioning for the vehicle 111 in the parking lot.

The information sending module 601 is configured to perform functions in step 401 and step 403 in Embodiment 10 of this application. The information module 601 may be configured to send location information and feature information of at least one landmark to the vehicle 111. The function is an optional function. In addition, the information module 601 may be further configured to send location information of a landmark 1 and/or a landmark 2, a landmark 3, ..., and a landmark N to the vehicle 111.

The information receiving module 602 is configured to perform a function of receiving information in step 402B in Embodiment 10 of this application, to receive feature information (image information) of the landmark 1 and/or the landmark 2, the landmark 3, ..., and the landmark N that is sent by the vehicle 111.

The processing module 603 is configured to: perform parsing or image recognition on the feature information, for example, the image information, of the landmark 1 and/or the landmark 2, the landmark 3, ..., and the landmark N that is received by the information receiving module 602, and determine the location information of the landmark 1 and/or the landmark 2, the landmark 3, ..., and the landmark N. The location information, which is determined by the processing module 603, of the landmark 1 and/or the landmark 2, the landmark 3, ..., and the landmark N is sent by the information sending module 601.

According to this solution, the assisted positioning apparatus may help the vehicle 111 recognize a nearby landmark of the vehicle, and obtain a location of the nearby landmark, to determine a location of the vehicle.

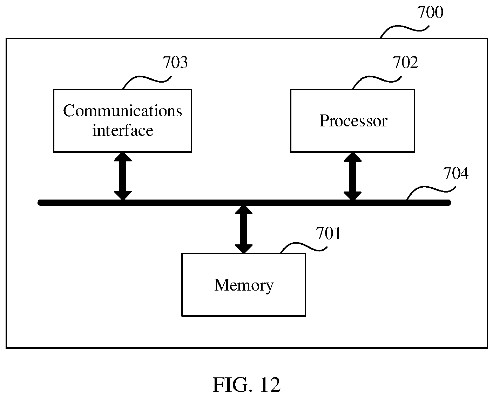

FIG. 12 is a schematic diagram of an apparatus according to an embodiment of this application. The apparatus may be the to-be-positioned device 111 or the assisted positioning device 101 in the foregoing embodiments. The apparatus 700 includes a processor 702, a communications interface 703, and a memory 701. Optionally, the apparatus 700 may further include a communications line 704. The communications interface 703, the processor 702, and the memory 701 may be connected to each other by using the communications line 704. The communications line 704 may be a peripheral component interconnect (peripheral component interconnect, PCI for short) bus, an extended industry standard architecture (extended industry standard architecture, EISA for short) bus, or the like. The communications line 704 may be classified into an address bus, a data bus, a control bus, and the like. For ease of representation, only one thick line is used to represent the communications line in FIG. 7, but this does not mean that there is only one bus or only one type of bus.

The processor 702 may be a CPU, a microprocessor, an ASIC, or one or more integrated circuits configured to control program execution in the solutions of this application. The processor 702 may be a specific implementation of the processing module 503 or the processing module 602.

The communications interface 703 is any apparatus like a transceiver, and is configured to communicate with another device or a communications network such as the Ethernet, a radio access network (radio access network, RAN), a wireless local area network (wireless local area networks, WLAN), or a wired access network.

The memory 701 may be a ROM or another type of static storage device capable of storing static information and an instruction, or a RAM or another type of dynamic storage device capable of storing information and an instruction, or may be an electrically erasable programmable read-only memory (electrically erasable programmable read-only memory, EEPROM), a compact disc read-only memory (compact disc read-only memory, CD-ROM), or another compact disc storage or optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of an instruction or a data structure and capable of being accessed by a computer, but is not limited thereto. The memory may exist independently and is connected to the processor by using the communications line 504. The memory may be alternatively integrated with the processor.

The memory 701 is configured to store a computer executable instruction for executing the solutions of this application, and execution of the computer executable instruction is controlled by the processor 702. The processor 702 is configured to execute the computer executable instruction stored in the memory 701, to implement the communication method provided in the foregoing embodiments of this application.

Optionally, the computer executable instruction in this embodiment of this application may also be referred to as application program code. This is not specifically limited in this embodiment of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are performed. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor so that the processor can read information from the storage medium and write information to the storage medium. Optionally, the storage medium may be further integrated into a processor. The processor and the storage medium may be disposed in an ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and the embodiments thereof, clearly, various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. Clearly, a person skilled in the art can make various modifications and variations to this application without departing from the scope of this application. This application is intended to cover these modifications and variations of this application provided that they fall within the scope of protection defined by the following claims and their equivalent technologies.

## Claims

1. A device positioning method, wherein the method comprises:
obtaining location information of at least one landmark and feature information of the at least one landmark, wherein the feature information comprises pattern information and/or identification information;
obtaining feature information of a first landmark, wherein the at least one landmark comprises the first landmark;
determining location information of the first landmark based on the feature information of the first landmark; and
determining a location of a device based on the location information of the first landmark.

2. The method according to claim 1, wherein the method further comprises:
obtaining first relative location information, wherein the first relative location information comprises relative location information of the device and the first landmark; and
the determining a location of a device comprises:
determining the location of the device based on the location information of the first landmark and the first relative location information.

3. The method according to claim 2, wherein the method further comprises:
obtaining feature information of at least one second landmark;
obtaining at least one piece of second relative location information, wherein the at least one piece of second relative location information comprises relative location information between the device and the at least one second landmark; and
determining location information of the at least one second landmark based on the feature information of the at least one second landmark; and
the determining a location of a device comprises:
determining the location of the device based on the location information of the first landmark, the location information of the at least one second landmark, the first relative location information, and the at least one piece of second relative location information.

4. The method according to any one of claims 1 to 3, wherein the obtaining location information of at least one landmark and feature information of the at least one landmark comprises:
receiving information, wherein the information comprises the location information of the at least one landmark and the feature information of the at least one landmark; or
reading prestored information, wherein the prestored information comprises the location information of the at least one landmark and the feature information of the at least one landmark.

5. The method according to any one of claims 1 to 4, wherein the method further comprises:
sending first information, wherein the first information comprises the feature information of the first landmark; and
the determining location information of the first landmark based on the feature information of the first landmark comprises:
receiving second information, wherein the second information comprises the location information of the first landmark.

6. A device positioning apparatus, wherein the apparatus comprises:
an information obtaining module, configured to obtain location information of at least one landmark and feature information of the at least one landmark, wherein the feature information comprises pattern information and/or identification information;
a perception module, configured to obtain feature information of a first landmark, wherein the at least one landmark comprises the first landmark; and
a processing module, configured to: determine location information of the first landmark based on the feature information of the first landmark, and determine a location of a device based on the location information of the first landmark.

7. The apparatus according to claim 6, wherein
the perception module is further configured to obtain first relative location information, wherein the first relative location information comprises relative location information between the device and the first landmark; and
the processing module is further configured to determine the location of the device based on the location information of the first landmark, and the device the first relative location information.

8. The apparatus according to claim 7, wherein
the perception module is further configured to obtain feature information of at least one second landmark and at least one piece of second relative location information, wherein the at least one piece of second relative location information comprises relative location information between the device and the at least one second landmark; and
the processing module is further configured to determine the location of the device based on the location information of the first landmark, location information of the at least one second landmark, the first relative location information, and the at least one piece of second relative location information.

9. The apparatus according to any one of claims 6 to 8, wherein
the information obtaining module is configured to receive information, wherein the information comprises the location information of the at least one landmark and the feature information of the at least one landmark; or
the information obtaining module is configured to read prestored information, wherein the prestored information comprises the location information of the at least one landmark and the feature information of the at least one landmark.

10. The apparatus according to any one of claims 6 to 9, wherein the apparatus further comprises:
a sending module, configured to send first information, wherein the first information comprises the feature information of the first landmark; and
the information obtaining module is further configured to receive second information, wherein the second information comprises the location information of the first landmark.

11. An assisted positioning method, wherein the method comprises:
sending location information of at least one landmark and feature information of the at least one landmark to a to-be-positioned device, wherein the feature information comprises pattern information and/or identification information.

12. The method according to claim 11, wherein the method further comprises:
receiving first information from the to-be-positioned device, wherein the first information comprises feature information of a first landmark; and
sending second information to the to-be-positioned device, wherein the second information comprises location information of the first landmark and the feature information of the first landmark, so that the to-be-positioned device determines a location of the to-be-positioned device based on the location information of the first landmark.

13. An assisted positioning apparatus, wherein the apparatus comprises:
an information sending module, wherein the information sending module is configured to send location information of at least one landmark and feature information of the at least one landmark to a to-be-positioned device, wherein the feature information comprises pattern information and/or identification information.

14. The apparatus according to claim 13, wherein the apparatus further comprises:
an information receiving module, configured to receive first information from the to-be-positioned device, wherein the first information comprises feature information of a first landmark;
a processing module, configured to determine location information of the first landmark based on the feature information of the first landmark; and
an information sending module, configured to send second information to the to-be-positioned device, wherein the second information comprises the location information of the first landmark and the feature information of the first landmark, so that the to-be-positioned device determines a location of the to-be-positioned device based on the location information of the first landmark.

15. A communications apparatus, comprising a processor and a memory, wherein the processor invokes a program stored in the memory, so that the apparatus is enabled to perform the method according to any one of claims 1 to 5 and claims 11 and 12.

16. A computer storage medium, wherein the computer storage medium stores a computer-readable instruction; and when the computer-readable instruction is executed by a processor, the method according to any one of claims 1 to 5 and claims 11 to 12 is implemented.

17. A computer program product comprising an instruction, wherein when the instruction is run on a computer, the computer is enabled to perform the method according to any one of claims 1 to 5 and claims 11 and 12.

18. A chip system, comprising a processor, configured to perform the method according to any one of claims 1 to 5 and claims 11 and 12.
